# EUROPEAN PATENT APPLICATION

(11) **EP 4 831 067 A1**
(43) Date of publication of application: **28.10.2026**
(21) Application number: 25305590.9
(22) Date of filing: 24.04.2025
(51) Int. Cl.: B64G 1/22, B64G 1/42, B64G 1/44, B64G 4/00

(54) **PHOTOVOLTAIC ARRAY SPACE PLATFORM ASSEMBLY**

(71) Applicant: Rovial SAS, 31770 Colomiers (FR)
(72) Inventor: The designation of the inventor has not yet been filed
(74) Representative: Cabinet Beau de Loménie

(57) **Abstract**

A high-power photovoltaic array (PVA) space platform assembly for integration into a high-power satellite involves mounting a PVA on a large structure, assembled by autonomous AI robots. The amount of electrical power available in space is increased while significantly reducing the cost. The autonomous assembly of the structure enables a more efficient utilization of space and resources. The assembly includes an avionic module (110), a payload module (114) coupled to the avionic module, and a main beam (102) coupled to the avionic module. The main beam has a folded configuration and a deployed configuration. In the folded configuration, the main beam creates a cage that surrounds the payload module. The assembly further includes secondary beams (104) coupled to the main beam and PVAs mounted to the secondary beams and operatively coupled to the avionic module. The avionic module is configured for transferring power from the PVAs to the payload module.

## Description

### BACKGROUND

### Field of the Art

The present disclosure is related to the field of generating high power in space for high-power satellites, aiming to improve power generation capabilities and efficiency in space-based applications.

### Discussion of the State of the Art

The field of satellite technology has seen significant advancements over the years, but it continues to grapple with the challenge of power generation and management. The current state of the art in satellite power systems involves the use of dedicated space solar arrays, which can be broadly categorized into two types.

The first type is a solar array constructed from a set of rigid panels. These panels are equipped with deployment and synchronization mechanisms, allowing them to generate power efficiently. However, this solution is not without its drawbacks. The rigid panels, which need to be installed between the satellite and the launch fairing, create a large deployed and stowed footprint volume along the spacecraft. This not only increases the complexity of the satellite design but also adds significant weight to the system, making it less efficient and more costly to launch.

The second type of solar array is made from a set of flexible PhotoVoltaic Arrays (PVAs), which are stowed in a concertina shape. This design is lighter and smaller than the rigid panel solution, making it more suitable for space applications. However, it requires complex boom and cradle mechanisms and intricate deployment sequences. These complexities increase the cost of the flexible PVA solution, making it more expensive than the rigid panel alternative.

In both types of solar arrays, highly efficient solar cells, such as Silicon triple junction or AsGa quadruple junctions, are used to maximize power generation. These cells have an efficiency above 30% at the beginning of life but are extremely expensive. The resulting cost of these solar arrays is around $330 per Watt, and the resulting mass is 15 grams per Watt. Therefore, generating 100kW using these technologies would imply a solution costing $33 million, weighing 1500 kg, and occupying a very large volume in the stowed configuration. These factors make such a solution economically and technically infeasible for satellite applications.

Moreover, there are not any single 100kW class satellites apparently under development. The common approach is to fragment the payload, leading to a constellation of lower-power satellites. While this may seem like a viable solution, it significantly increases the cost of managing the fleet and the product itself. This is due to the need for multiple avionics systems instead of a single one, further compounding the problem.

In addition, efficient deployment of PVAs is critical for powering space-based infrastructure. Traditional deployment mechanisms often rely on pre-configured foldable arrays with limited adaptability once deployed. As space missions demand higher modularity, upgradability, and resilience, there is a growing need for robotic systems capable of assembling large-scale PVAs in orbit, especially on truss-like support structures or expandable habitats.

Therefore, there is a pressing need for a new solution that addresses these challenges in satellite power systems, providing a cost-effective, lightweight, and compact solution that can generate high power levels.

### SUMMARY

The present invention pertains to a high-power Photovoltaic Array (PVA) space platform assembly that can be integrated into a high-power satellite. The assembly provides a novel approach to satellite power systems by installing a PVA on a large structure assembled by autonomous AI robots. The robots integrate beam-traversing mobility with an articulated arm for PVA deployment and assembly. This innovative approach aims to significantly increase the amount of electrical power available in space, while drastically reducing the cost compared to current solutions.

The assembly in accordance with the present invention addresses the challenges of previous solutions by offering a 100kW satellite in Geostationary Earth Orbit (GEO) in a single launch, at a price that is at least half of current costs. This is achieved through the use of flexible PVAs utilizing perovskite cells, tandem silicon-perovskite cells or CIGS (Cu(In, Ga)Se2)-perovskite cells, or new developments on AsGa cells (with associated cover glass). These cells offer an efficiency minimum of 15% at the end of life (15+1 years in Geostationary orbit) at a minimum price of approximately $0.5 per Watt.

The PVA is supported by a structure assembled by autonomous robots. For a 100kW satellite with an efficiency of 15%, the required structure area is around 840 m². The use of robotics for assembly allows for the stowing of the supporting structure components along the spacecraft body under the smallest available fairing, which is ARIANE6. This enables the launch of a 100kW satellite in orbit through a single launch, with a payload mass of around 4500 kg.

In one example, the present invention is a high-power PVA space platform assembly for integration into a high-power satellite. The assembly includes an avionic module that may be configured to control navigation, communication, and power management. The assembly further includes a payload module coupled to the avionic module, and a main beam coupled to the avionic module. The main beam has a folded configuration and a deployed configuration. In the folded configuration, the main beam creates a cage that surrounds the payload module. The assembly further includes a plurality of secondary beams. Each one of the secondary beams is coupled to the main beam and has a retracted configuration and an extended configuration. The plurality of secondary beams extend perpendicular to the main beam when the secondary beams are in the extended configuration. The assembly further includes a respective plurality of PVAs mounted to the plurality of secondary beams and operatively coupled to the avionic module. The avionic module is configured for transferring power from the PVAs to the payload module. The plurality of secondary beams may be telescopic beams, lattice beams, or rope beams.

The assembly may further include an auxiliary solar array coupled to the main beam. The auxiliary solar array may be configured for providing power to the assembly during a process of moving the plurality of secondary beams from the retracted configuration to the extended configuration. The assembly may further include an electrical harness for electrically coupling the plurality of PVAs to the avionic module and the payload module.

Still further, the assembly may include an autonomous robotic system module configured for facilitating a process of moving the plurality of secondary beams from the retracted configuration to the extended configuration. The autonomous robotic system module may include a mobile base having a motorized wheels mechanism configured for traversing the main beam and the plurality of secondary beams. The mobile base may include a stabilizing mechanism configured for generating normal reaction forces to move. The autonomous robotic system module may include a perception module having a sensor array that comprises optical and alignment sensors to verify panel orientation and connectivity.

The assembly in accordance with the present invention has several benefits, including the use of robots in space for the inspection, maintenance, and repair of the satellite during its lifespan. The robot is also capable of retrieving new payloads sent by cargo to upgrade the mission or add extra payloads.

### BRIEF DESCRIPTION OF THE DRAWINGS

The accompanying drawings illustrate several embodiments and, together with the description, serve to explain the principles of the invention according to the embodiments. It will be appreciated by one skilled in the art that the particular arrangements illustrated in the drawings are merely exemplary and are not to be considered as limiting of the scope of the invention or the claims herein in any way.
Figs. 1A and 1B illustrate a high-power PVA space platform assembly in a deployed configuration and a folded configuration, respectively, in accordance with one embodiment of the present invention.
Figs. 2A-2C illustrate steps of a process for moving a high-power PVA space platform assembly from a folded configuration to a deployed configuration, in accordance with one embodiment of the present invention.
Figs. 3A and 3B illustrate main beams of a high-power PVA space platform assembly in a folded configuration and a deployed configuration, respectively, in accordance with one embodiment of the present invention.
Fig. 4 illustrates an electrical harness of a high-power PVA space platform assembly, in accordance with one embodiment of the present invention.
Fig. 5 illustrates three examples of secondary beams of a high-power PVA space platform assembly, in accordance with one embodiment of the present invention.
Fig. 6 illustrates a PVA in a folded configuration, a partially deployed configuration, and a fully deployed configuration, in accordance with one embodiment of the present invention.
Fig. 7 illustrates a deployment mechanism for a PVA for a high-power PVA space platform assembly, in accordance with one embodiment of the present invention.
Fig. 8 illustrates an auxiliary solar array for a high-power PVA space platform assembly, in accordance with one embodiment of the present invention.
Figs. 9A, 9B, 10 and 11 illustrate examples of robotic systems that may be used to facilitate deployment of a high-power PVA space platform assembly, in accordance with embodiments of the present invention.

### DETAILED DESCRIPTION

The present invention is for a 50 kW to 250 kW PVA space platform assembly designed for generating electrical power in outer space environments. The invention is described by reference to various elements herein. It should be noted, however, that although the various elements of the inventive apparatus are described separately below, the elements need not necessarily be separate. The various embodiments may be interconnected and may be cut out of a singular block or mold. The variety of different ways of forming an inventive apparatus, in accordance with the disclosure herein, may be varied without departing from the scope of the invention.

Generally, one or more different embodiments may be described in the present application. Further, for one or more of the embodiments described herein, numerous alternative arrangements may be described; it should be appreciated that these are presented for illustrative purposes only and are not limited to the embodiments contained herein or the claims presented herein in any way. One or more of the arrangements may be widely applicable to numerous embodiments, as may be readily apparent from the disclosure. In general, arrangements are described in sufficient detail to enable those skilled in the art to practice one or more of the embodiments, and it should be appreciated that other arrangements may be utilized and that structural changes may be made without departing from the scope of the embodiments. Particular features of one or more of the embodiments described herein may be described with reference to one or more particular embodiments or figures that form a part of the present disclosure, and in which are shown, by way of illustration, specific arrangements of one or more aspects. It should be appreciated, however, that such features are not limited to usage in the one or more particular embodiments or figures with reference to which they are described. The present disclosure is neither a literal description of all arrangements of one or more of the embodiments nor a listing of features of one or more of the embodiments that must be present in all arrangements

Headings of sections provided in this patent application and the title of this patent application are for convenience only and are not to be taken as limiting the disclosure in any way.

Devices and parts that are connected to each other need not be in continuous connection with each other, unless expressly specified otherwise. In addition, devices and parts that are connected with each other may be connected directly or indirectly through one or more connection means or intermediaries.

A description of an aspect with several components in communication with each other does not imply that all such components are required. To the contrary, a variety of optional components may be described to illustrate a wide variety of possible embodiments and in order to more fully illustrate one or more embodiments. Similarly, although process steps, method steps, algorithms or the like may be described in a sequential order, such processes, methods and algorithms may generally be configured to work in alternate orders, unless specifically stated to the contrary. In other words, any sequence or order of steps that may be described in this patent application does not, in and of itself, indicate a requirement that the steps be performed in that order. The steps of described processes may be performed in any order practical. Further, some steps may be performed simultaneously despite being described or implied as occurring non-simultaneously (e.g., because one step is described after the other step). Moreover, the illustration of a process by its depiction in a drawing does not imply that the illustrated process is exclusive of other variations and modifications thereto, does not imply that the illustrated process or any of its steps are necessary to one or more of the embodiments, and does not imply that the illustrated process is preferred. Also, steps are generally described once per aspect, but this does not mean they must occur once, or that they may only occur once each time a process, method, or algorithm is carried out or executed. Some steps may be omitted in some embodiments or some occurrences, or some steps may be executed more than once in a given aspect or occurrence.

When a single device or article is described herein, it will be readily apparent that more than one device or article may be used in place of a single device or article. Similarly, where more than one device or article is described herein, it will be readily apparent that a single device or article may be used in place of the more than one device or article.

The functionality or the features of a device may be alternatively embodied by one or more other devices that are not explicitly described as having such functionality or features. Thus, other embodiments need not include the device itself.

Techniques and mechanisms described or referenced herein will sometimes be described in singular form for clarity. However, it should be appreciated that particular embodiments may include multiple iterations of a technique or multiple instantiations of a mechanism unless noted otherwise. Process descriptions or blocks in figures should be understood as representing modules, segments, or portions of code which include one or more executable instructions for implementing specific logical functions or steps in the process. Alternate implementations are included within the scope of various embodiments in which, for example, functions may be executed out of order from that shown or discussed, including substantially concurrently or in reverse order, depending on the functionality involved, as would be understood by those having ordinary skill in the art.

### Apparatus

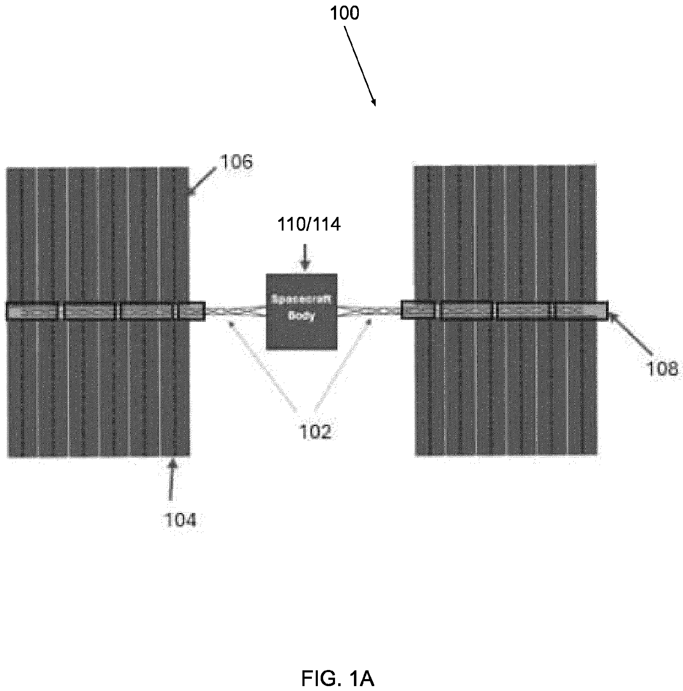

A high-power photovoltaic array (PVA) space platform assembly 100, as shown in Fig. 1A, includes main beams 102 that extend from a spacecraft body that includes an avionic module 110 and a payload module 114. The avionic module 110 is for system control and operation, and the payload module 114 is for additional equipment. Secondary beams 104 with PVAs 106 coupled thereto extend perpendicularly to the main beams 102. The assembly 100 further includes an auxiliary solar array 108 coupled to the main beams 102. The auxiliary solar array 108 efficiently generates and harnesses solar energy that can be used during the process of assembling the platform. The high-power PVA space platform assembly 100 can interact with various products and its environment by serving as a power source for powered payloads attached to the platform 100. These payloads, included in the payload module 114, may include multi RF telecom missions, satellite-to-satellite connectivity systems, data centers in space, space laser applications, space teleportation technologies, moon servicing missions, power beaming projects, and other related applications. The assembly 100 is configured to provide a stable and efficient power supply to enable the successful operation of these diverse products and services in the space environment.

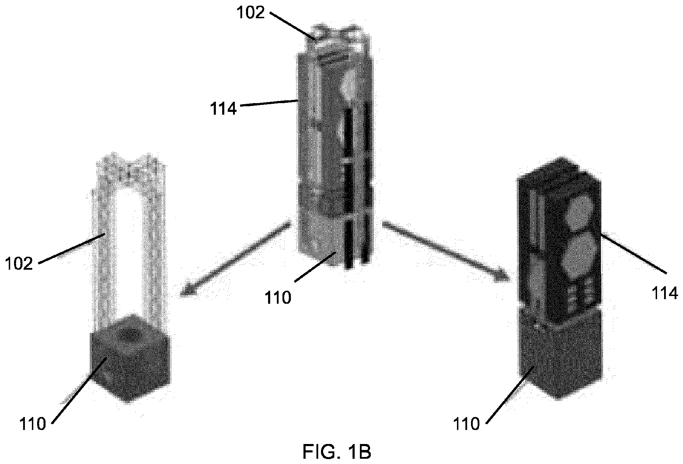

Fig. 1A depicts the assembly 100 in a deployed configuration, while Fig. 1B depicts the assembly in a folded configuration. In particular, Fig. 1B depicts the avionic module 110 and the payload module 114 on the right, and depicts the avionic module 110 and the main beams 102 in the folded configuration on the left. The middle of Fig. 1B depicts the entire assembly 100 in the folded configuration, including the main beams 102, the avionic module 110, and the payload module 114. When the main beams 102 are in the folded configuration, the main beams 102 form a cage around the payload module 114.

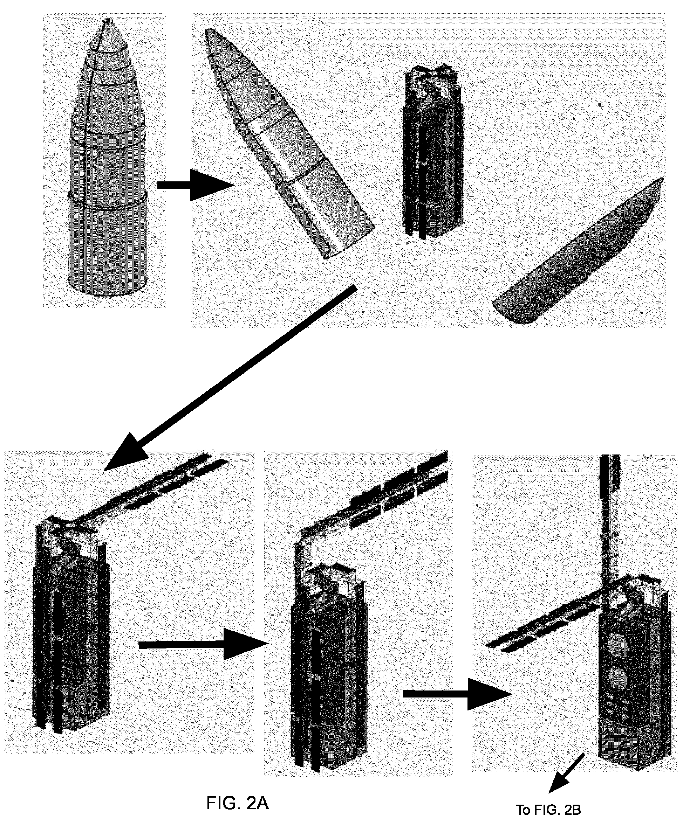

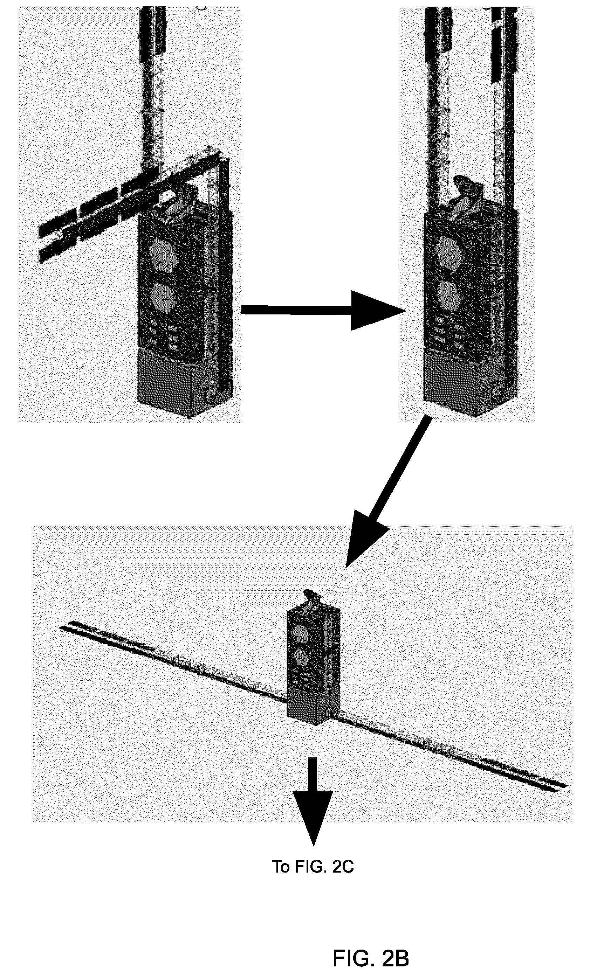

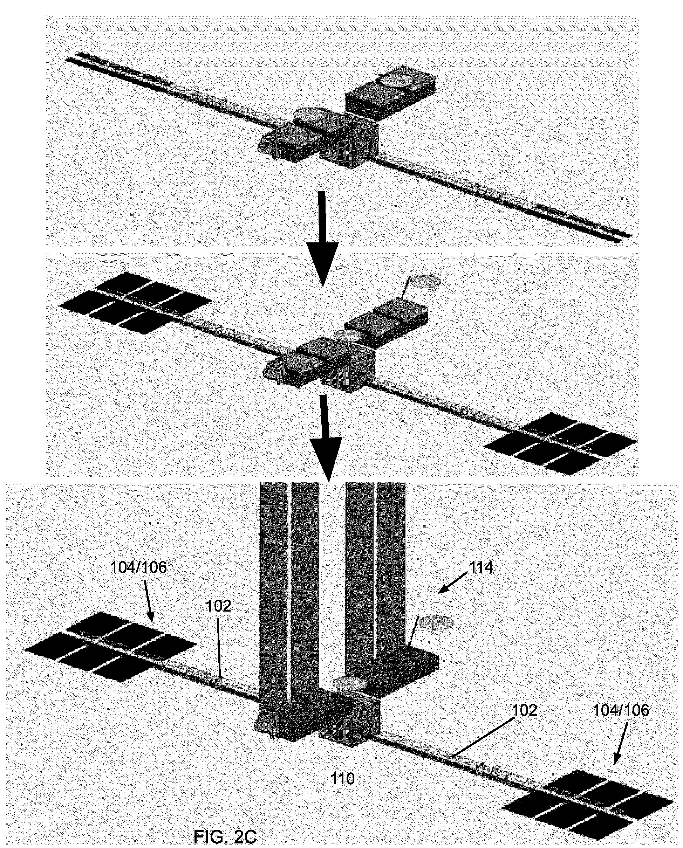

In one example, the steps for moving from the folded configuration shown in Fig. 1B to the deployed configuration shown in Fig. 1A are shown in Figs. 2A-2C. As shown at the top of Fig. 2A, the assembly 100 is maintained in the folded configuration prior to use and also during launch of the spacecraft in order to conserve cargo space within the spacecraft launch vehicle. The assembly 100 transitions to a deployed configuration after the satellite reaches orbit. The steps of transitioning from the folded configuration to the deployed configuration are shown at the bottom of Fig. 2A to the bottom of Fig. 2C. The final deployed configurations of the assembly 100 and the payload 114 are depicted at the bottom of Fig. 2C.

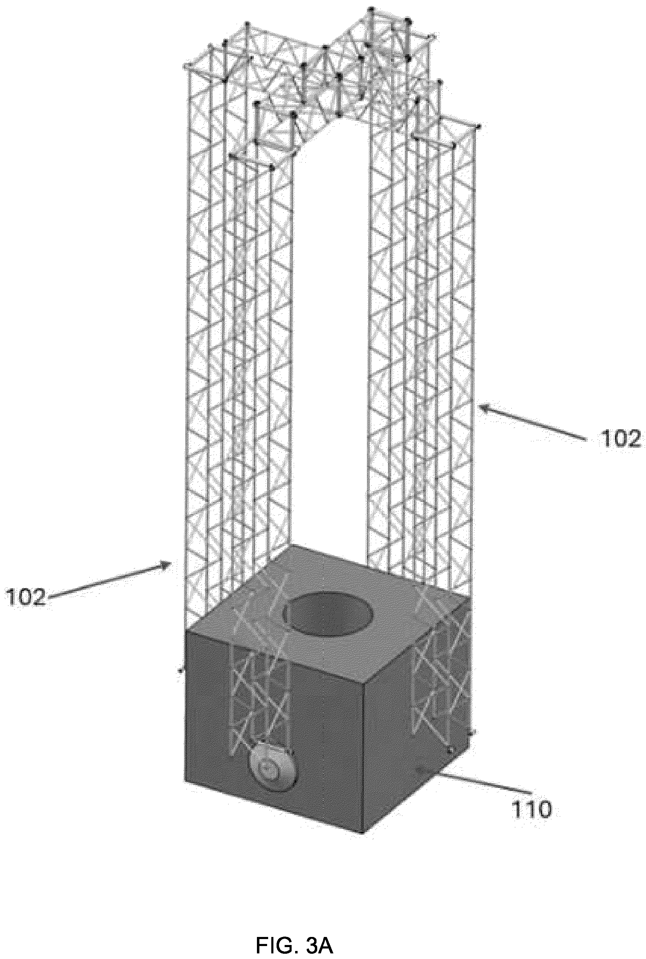

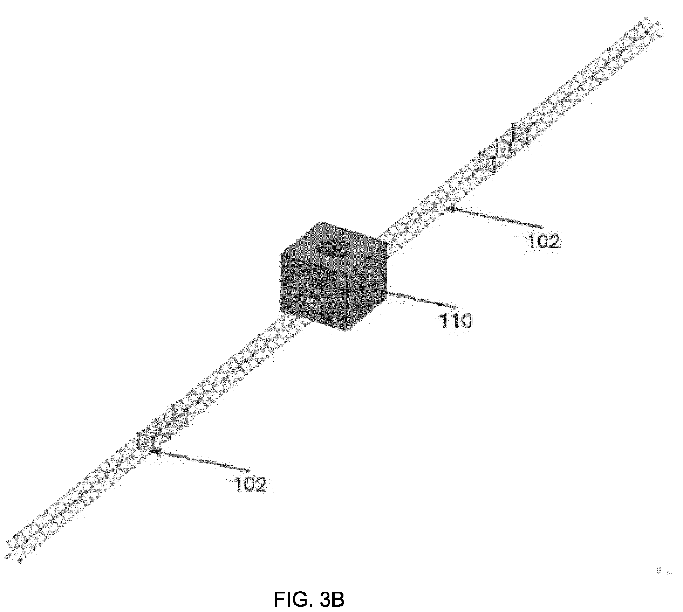

The main beams 102 are shown in the folded configuration in Fig. 3A and in the deployed configuration in Fig. 3B. As shown in Figs. 1B and 2A, the main beams 102 in the folded configuration form a cage that surrounds the payload module 114. The main beams 102 serve as a foundational structure, supporting the secondary beams 104. The main beams 102 include lattice structure portions designed to support the PVAs 106 that generate power. These main beams 102 are equipped with deployment mechanisms that allow for stowing around the spacecraft body during launch and for deployment after launcher separation.

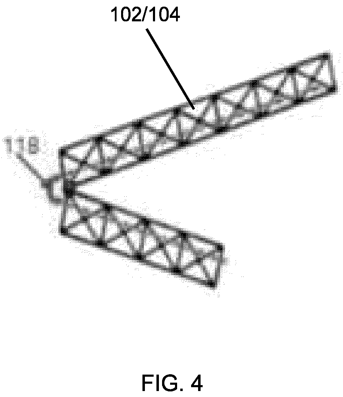

The main beam 102 serves several functions. Firstly, the main beam 102 provides mechanical and electrical links between the spacecraft body and the PVAs 106. Secondly, the main beam 102 supports a robot 120 (discussed in further detail below) during its displacement between the spacecraft base and the tip of the main beam 102. Thirdly, the main beam 102 supports an electrical harness 118 (shown in Fig. 4 and discussed in more detail below) that connects each PVA 106 to the spacecraft body 110. Fourthly, the main beam 102 supports the auxiliary solar array 108 to generate power until the main PVAs 106 are deployed. The main beam 102 also transfers the mechanical loads of the resulting assembly to the spacecraft structure when exposed to the space environment. Furthermore, the main beam 102 provides sufficient stiffness of the resulting assembly to avoid coupling with the rest of the satellite's dynamic modes. Lastly, the main beam 102 ensures the alignment of the PVAs 106 and the auxiliary solar array 108 with the sun through rotation with the avionic module 110.

The main beam 102 is equipped with deployment mechanisms that can be passive (springs) or active (rotary actuators). Each part of the main beam 102 is synchronously deployed to master the deployment volume around the spacecraft body through commands (pyrotechnic or electrical). An anti-backlash unit is installed on each portion of the main beam 102 to ensure sufficient stiffness after each deployment. Electrical harnesses 118, shown in Fig. 4, extend along the length of the main beam 102 and the secondary beams 104 inside the lattice structure to electrically connect each PVA 106 to the avionic module 110 and/or the payload module 114. The electrical harness 118 may also enable communication between the satellite and the avionic module 110. A harness loop is integrated at each tip of beam portions to ensure a good kinematic of the harness 118 during beam deployment, reducing resistive torques.

The main beams 102 may be deployed by an electrical command. On one of the faces of the main beam 102, solar cell strings are installed. These are electrically connected to the spacecraft to transfer energy. The cells used in this array are terrestrial low-cost silicon cells. The expected life duration of this solar array is approximately 6 months. The cells are mounted on flexible Kapton support with standard interconnectors and unitary bypass diodes. They are protected with standard cover glass.

The interfaces, both mechanical and electrical, with secondary beams 104, are installed on the main beam 102 with a constant width pitch, which is a function of the selected PVA dimensions. A rotary mechanism ensures the rotation between the arrays 106, 108 and the avionic module 110, allowing a constant alignment of the arrays 106, 108 with the sun and the payload module 114 with its target.

In another example, the robot 120 may be used to ensure the deployment sequence of each main beam portion. This could provide additional flexibility and control during the deployment process.

The secondary beams 104 serve several functions in the assembly 100. The secondary beams 104 maintain the position of the PVAs 106 throughout the satellite's lifespan. Additionally, the secondary beams 104 assist in deploying the PVAs 106 from a stowed configuration to a fully deployed configuration, maintaining tension on the PVAs 106 to ensure the proper surface area is exposed to the sun. The secondary beams 104 also transfer the mechanical loads of the resulting assembly to the main beam 102 when exposed to the space environment, which may include sun pressure, thermal gradients, and spacecraft accelerations. Furthermore, the secondary beams 104 provide sufficient stiffness for the resulting assembly to avoid coupling with the satellite's dynamic modes.

During launch, the secondary beams 104 are stowed to minimize volume under the fairing. The secondary beams 104 are either installed along the main beam 102 or the spacecraft body in dedicated storage areas. A robot 120 may be used to transfer the secondary beam 104 to the requested location where the interface between the main beam 102 and the secondary beam 104 is located.

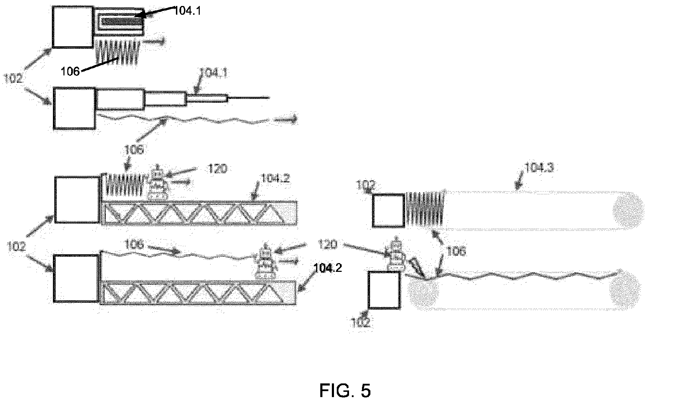

Following the deployment of the main beam 102, the secondary beams 104 are deployed or assembled, as shown in Fig. 5. In one example, the secondary beams 104 are telescopic beams 104.1 and deployment is achieved through telescopic deployment activated by an actuator or the robot 120. In another example, the secondary beams 104 are lattice beams 104.2, similar to the main beams 102. Deployment of the lattice beams 104.2 is achieved through a system substantially similar to that of the main beam 102, with various portions of the lattice beam 104.2 equipped with hinges and anti-backlash units. The robot 120 may assist the deployment of the lattice beams 104.2. In yet another example, the secondary beams 104 are rope beams 104.3 that include a system of pulleys.

The dimensions of the secondary beams 104 ensure load paths between the PVA 106 and the main beam 102, and provide adequate stiffness for the PVA assembly. Deployment of the PVAs 106 along the secondary beams 104 can occur simultaneously with the deployment of the telescopic beam 104.1, via a robot 120 moving on the secondary lattice beam 104.2 and pulling the PVA 106 to a certain tension, or through a system of rope and pulley installed on the secondary rope beam 104.3 activated by a robot 120.

Alternatives to the secondary beam could include a beam integrated section by section with the use of the robot. Another alternative could be replacing the secondary beam with a fully gridded structure fitted along the main beam and assembled by the same robot.

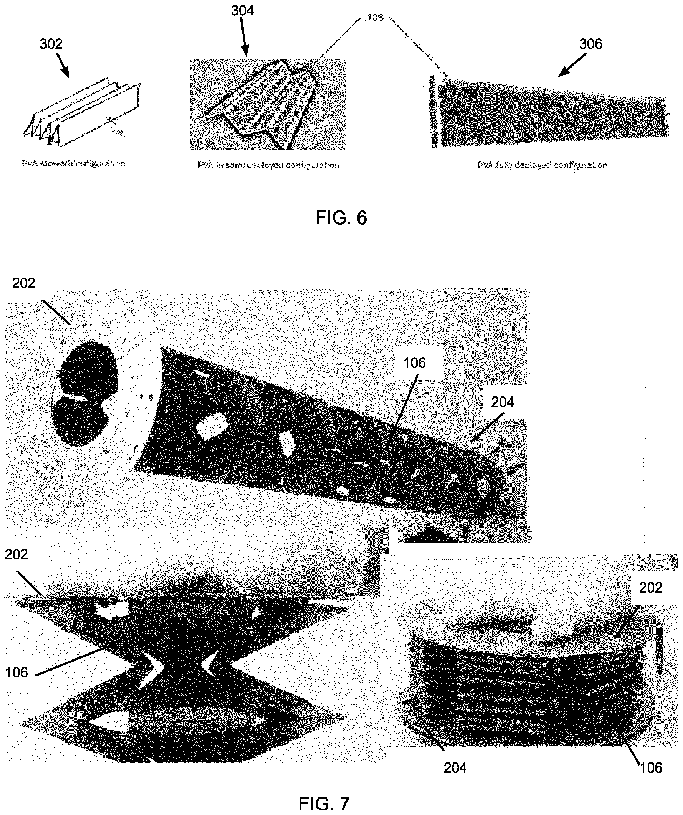

The PVA 106 is shown in Fig. 6 in a stowed configuration 302, a partially deployed configuration 304, and a fully deployed configuration 306. The PVA 106 is designed to generate electrical power in the range of 50 to 250kW. The PVA 106 includes solar cells that are protected by a cover glass and deposited on a Kapton support. In order to minimize the volume of the PVA 106 in a stowed configuration, the PVA 106 is folded in a concertina shape or an accordion-style manner. The deployed configuration is achieved by pulling the PVA 106 and applying a constant tension.

The solar cells of the 50kW to 250kW PVA 106 may include various types of cells, such as Perovskites cells, Tandem Silicon-Perovskites, or CIGS (Cu(In, Ga)Se2)-Perovskites cells. New developments on AsGa cells may also be used, as they offer better cell efficiency and greater resistance to radiation effects.

In one example, shown in Fig. 7, the PVA 106 is stowed between two plates 202, 204, which are mounted at each extremity of the PVA 106 and maintained by hold down points. The first plate 202 serves as the attachment point to the secondary beam 104, while the second plate 204 is where tension is applied to pull and deploy the PVA 106. Once a certain tension is measured, the displacement is halted and the plate is fixed in position to the secondary beam 104. Springs (not shown) are used between the plates 202, 204 and the PVA 106 to compensate for thermoelastic load gradients.

Various aspects of the PVA 106, such as the selection of cover glass (type and thickness), the materials used for the cell interconnectors, the distance between cell strings, and the unitary by-pass diode cell, are chosen to protect the satellite against sun radiation environment, aging effects, and second arc possibilities.

In another example, the PVA may have a roller shape instead of the concertina shape. The PVA can also be stowed in different locations to ensure the best accommodation in the launcher. In such cases, the robot would be responsible for displacing, installing, and connecting them. Spare parts of the PVA can be embedded to ensure replacement capability.

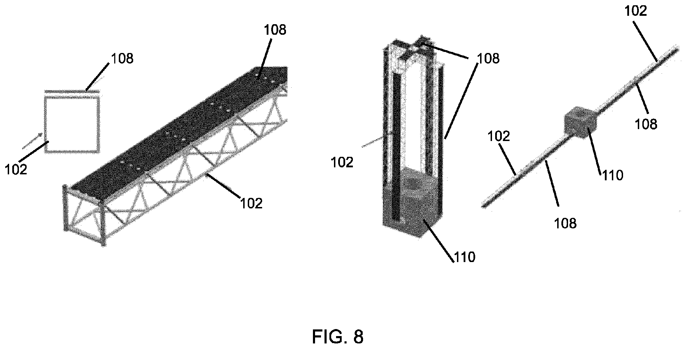

The auxiliary solar array 108, depicted in more detail in Fig. 8, is designed to provide power to the satellite after its injection into orbit. Initially, the satellite is powered by a power storage system, which has a limited duration. The auxiliary solar array 108 steps in to charge the battery and power the satellite thermal control system, maintaining the satellite units within an acceptable temperature range. This auxiliary solar array 108 can produce up to 7000 W until the deployment of all PVAs 106 onto the secondary beams 104. The auxiliary solar array 108 may also serve as a backup power source.

An alternative to the auxiliary solar array involves the selection of the cells used for this function. The same type of cells employed for the main PVAs could be used, allowing this auxiliary solar array to contribute to the power generation budget over the 15+ years of the satellite's life duration.

The avionic module 110 is a component of the satellite, serving as the housing for all the functional chains necessary to maintain the operation of the satellite in space. These functional chains include propulsion, telecommand and telemetry, power management (which encompasses the regulator and power storage), attitude determination and control, and thermal control. In addition to housing these functions, the avionic module 110 also serves as the interface with the launcher, where all the primary mechanical load passes through. The avionic module 110 facilitates mechanical and electrical connection between the arrays 106, 108 and the power functional chain, which includes the power storage and regulation unit. The avionic module 110 is connected to the payload module 114 and facilitates the power transfer from the arrays 106, 108 to the payload module 114.

During the launch phase, the avionic module 110 supports the attachment points of the main beams 102. The connection of the arrays 106, 108 to the avionic module 110 is accomplished through a Solar Array Rotary Actuator (SARA). The function of the SARA is to allow the solar arrays 106, 108 to permanently face the sun, i.e., turning the arrays 106, 108 by one round per day and transferring the generated power via slip rings equipping the SARA.

An alternative to this setup could involve attaching the PVAs directly to the payload module 114. This would bypass the need for the avionic module to serve as the intermediary in the power transfer from the PVAs to the payload module.

The payload module 114 is a versatile component that can house a variety of payloads, including but not limited to telecommunication payloads, data center payloads, power beaming systems, laser applications, space teleport, in-orbit servicing, and hosted payload. The payload module 114 can be pressurized or not, depending on the requirements of the specific mission. To fit within the launcher fairing volume, the payload module 114 is installed in a vertical position and is mounted and fixed onto the avionic module 110, as shown in Figs. 1B and 2A. The main beams 102 are attached to the payload module 114 in the folded configuration during launch to transfer loads from the main beam 102 to the satellite primary structure of the avionic module 110. Upon receiving an electrical command, the payload module 114 deploys along one axis, positioning the antennae to point toward the target, which could be Earth or another celestial body.

The electrical harness 118, shown in Fig. 4, serves as the conduit for connecting each array 106, 108 to the SARA. The electrical harness 118 is routed along and attached to the internal cavity of the main beam 102. The harness gauges are selected to minimize its mass and joules dissipation. Between two portions of the main beam 102, near the deployment hinge, the harness 118 is routed to form a pigtail, minimizing the resistive torque versus the torque generated by the hinge.

The robotic system module is designed to function as one subsystem of a larger orbital platform capable of dynamic structural assembly and system maintenance. The robotic system module 120 for in-orbit PVA assembly includes a mobile base module for displacement, an articulated robotic arm, control software, and an environmental perception mechanism (hardware and software). The mobile base is designed to traverse support beams in a microgravity environment. The arm is for manipulating and assembling photovoltaic elements. The control and perception modules are for autonomous execution of assembly tasks. This robotic system forms one of the functional modules of a larger orbital PVA assembly system and because of the modular interfaces it integrates, it is compatible with various spacecraft architectures.

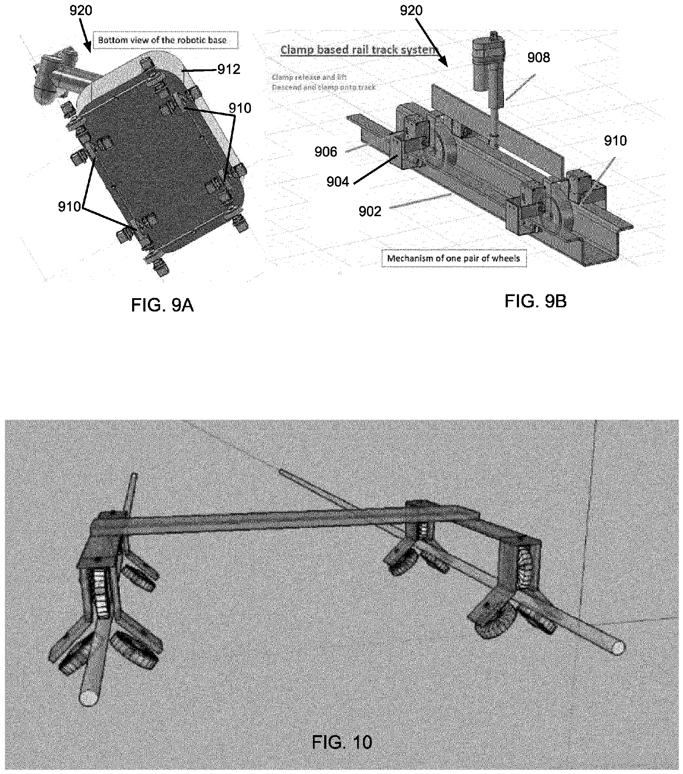

The mobile base is fitted with motorized wheels to move along large structural beams of a spacecraft. The base includes stabilizing mechanisms, such as clamps or magnetic locks, to secure the robot during high-precision tasks. The structural beam may be a specific shape configured for a robot 920 to hold onto through side clamps. For example, a U-Shaped rail 902 such as that shown in Fig. 9B is configured for the robot 920 to clamp onto. The clamping mechanism 904 is actuated by motors 906 and a linear actuator 908 hugs the beam 902 to create the necessary normal reaction for the wheels 910 to move along the beam 902. The underside of the mobile base 912 of the robot 920 is shown in Fig. 9A.

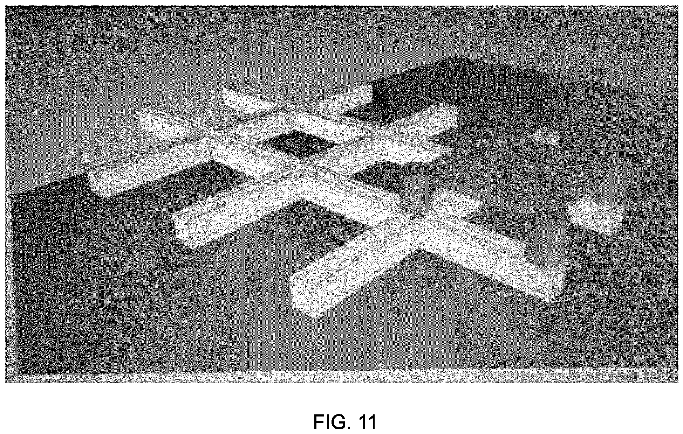

It should be noted that the clamping mechanism can be customized to hug structural beams of different shapes, such as U-shaped (as in Fig. 9B) or spherical (as in Fig. 10). In one example, shown in Fig. 11, the mobile base of the robotic system includes wheels that fit inside the cavity of a beam having grooves and tracks.

An articulated robotic arm may be mounted on the mobile base, with multiple degrees of freedom. The arm includes an end-effector which can be customized to grasp photovoltaic panels, unfold them, and position them on designated connection points.

A control module may be integrated within the robotic system and operatively connected to the mobile base and the robotic arm. The control module may be configured for managing robotic mobility, sensing, and manipulation. The robot can perform photovoltaic array assembly operations in orbit in fully autonomous mode, semi-autonomous mode via teleoperation, or in supervised autonomy with real-time sensor feedback.

The robotic system may further include an onboard perception system with sensors, including visual cameras, alignment sensors, and thermal or infrared systems to assist in assembly, diagnostics, and verification of successful deployment.

The robot may retrieve folded or roll-packed photovoltaic segments from a storage bay, traverse the support structure 102, 104, deploy and unfold the panels into a flattened or articulated configuration, and secure the panels using mechanical locking or attachment systems. Electrical connections may also be supported by precise positioning.

### Additional Considerations

As used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Some embodiments may be described using the expression "coupled" and "connected" along with their derivatives. For example, some embodiments may be described using the term "coupled" to indicate that two or more elements are in direct physical or electrical contact. The term "coupled," however, may also mean that two or more elements are not in direct contact with each other, but yet still co-operate or interact with each other. The embodiments are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and Bis false (or not present), A is false ( or not present) and Bis true ( or present), and both A and B are true ( or present).

In addition, use of the "a" or "an" are employed to describe elements and components of the embodiments herein. This is done merely for convenience and to give a general sense of the invention. This description should be read to include one or at least one and the singular also includes the plural unless it is obvious that it is meant otherwise.

Upon reading this disclosure, those of skill in the art will appreciate still additional alternative structural and functional designs for a system and/or a process associated with the disclosed principles herein. Thus, while particular embodiments and applications have been illustrated and described, it is to be understood that the disclosed embodiments are not limited to the precise construction and components disclosed herein. Various apparent modifications, changes and variations may be made in the arrangement, operation and details of the method and apparatus disclosed herein without departing from the spirit and scope defined in the appended claims.

## Claims

1. A high-power photovoltaic array space platform assembly for integration into a high-power satellite, the assembly comprising:
an avionic module (110);
a payload module (114) coupled to the avionic module;
a main beam (102) coupled to the avionic module, the main beam having a folded configuration and a deployed configuration, wherein the main beam, in the folded configuration, creates a cage that surrounds the payload module;
a plurality of secondary beams (104), each one of the secondary beams being coupled to the main beam and having a retracted configuration and an extended configuration, wherein the plurality of secondary beams extend perpendicular to the main beam when the secondary beams are in the extended configuration; and
a respective plurality of photovoltaic arrays (106) mounted to the plurality of secondary beams and operatively coupled to the avionic module, wherein the avionic module is configured for transferring power from the photovoltaic arrays to the payload module.

2. The assembly of claim 1, wherein the plurality of secondary beams (104) are telescopic beams, lattice beams, or rope beams.

3. The assembly of claim 1 or 2, further comprising an auxiliary solar array (108) coupled to the main beam (102), wherein the auxiliary solar array is configured for providing power to the assembly during a process of moving the plurality of secondary beams from the retracted configuration to the extended configuration.

4. The assembly of any of claims 1 to 3, further comprising an electrical harness (118) for electrically coupling the plurality of photovoltaic arrays to the avionic module (110) and the payload module (114).

5. The assembly of any of claims 1 to 4, further comprising an autonomous robotic system module (120) configured for facilitating a process of moving the plurality of secondary beams (104) from the retracted configuration to the extended configuration.

6. The assembly of claim 5, wherein the autonomous robotic system module (120) comprises a mobile base (912) having a motorized wheels mechanism (910) configured for traversing the main beam (102) and the plurality of secondary beams (104).

7. The assembly of claim 6, wherein the mobile base (912) comprises a stabilizing mechanism configured for generating normal reaction forces to move.

8. The assembly of any of claims 5 to 7, wherein the autonomous robotic system module (120) comprises a perception module having a sensor array that comprises optical and alignment sensors to verify panel orientation and connectivity.

9. The assembly of any of claims 1 to 8, wherein the avionic module (110) is configured to control navigation, communication, and power management.
